# EUROPÄISCHE PATENTSCHRIFT

(11) **EP 3 114 161 B1**
(45) Veröffentlichungstag und Bekanntmachung des Hinweises auf die Patenterteilung: **18.10.2023**
(21) Anmeldenummer: 15710151.0
(22) Anmeldetag: 06.03.2015
(51) Int. Cl.: C08K 5/00, C08L 63/00

(54) **PHOTOHÄRTBARE EPOXIDHARZSYSTEME**
PHOTOCURABLE EPOXY RESIN SYSTEMS
SYSTÈMES DE RÉSINE ÉPOXYDE PHOTODURCISSABLES

(30) Priorität: 07.03.2014 DE 102014204265
(43) Veröffentlichungstag der Anmeldung: 11.01.2017
(73) Patentinhaber: Henkel AG & Co. KGaA, 40589 Düsseldorf (DE)
(72) Erfinder: HAGENBUCHER, Melanie, 40215 Düsseldorf (DE); HORNUNG, Martin, 69120 Heidelberg (DE)
(86) Internationale Anmeldenummer: PCT/EP2015/054697
(87) Internationale Veröffentlichungsnummer: WO 2015/132372

(56) Entgegenhaltungen:
- EP-A1- 1 299 448
- WO-A1-97/05172
- WO-A2-2010/104603

## Beschreibung

Die vorliegende Erfindung richtet sich auf eine photohärtbare Epoxidharzzusammensetzung mit verbesserter Zähigkeit und Flexibilität, die ein aromatisches Epoxidharz, einen Zähigkeitsvermittler, einen Flexibilisator und einen kationischen Photoinitiator enthält.

In bestimmten Anwendungsbereichen sind Harzsysteme mit exzellenten Adhäsionseigenschaften und hoher Alterungsbeständigkeit in Kombination mit kurzen Herstellungszykluszeiten erforderlich. Für solche Anwendungen sind insbesondere UV-härtbare Epoxidharzsysteme geeignet. Verfügbare Systeme haben allerdings den Nachteil, dass sie bei der Exposition gegenüber schnellen und hohen Temperaturschwankungen brüchig werden. Das ist insbesondere bei der Versiegelung von elektrischen Leitungen und Kontakten ein erhebliches Problem, da es durch poröse und brüchige Versiegelungsmassen zu elektrochemischer Korrosion kommt.

WO 97/05172 offenbart Mischungen von Epoxidharzen mit kationischen Initiatoren. Die offenbarten Zusammensetzungen bestehen aus einem Epoxidharz, einem kationischen Initiator wie einem Diaryliodonium- oder Triarylsulfoniumsalz spezifischer Anionen und einem Zähigkeitsmittel wie einem Thermoplasten, einem hydroxyhaltigen thermoplastischen Oligomer, einem epoxidhaltigen thermoplastischen Oligomer, einem reaktiven Weichmacher und Gummi, Elastomer oder eine Mischung davon. Die ausgehärtete Zusammensetzungen sollen hohe Glasübergangstemperaturen, gute mechanische Eigenschaften und eine gute Zähigkeit aufweisen.

Es besteht daher Bedarf an Epoxidharzsystemen, die eine höhere Flexibilität aufweisen und daher auch starke Temperaturschwankungen überstehen ohne brüchig zu werden. Zusätzlich sollten derartige Systeme eine hohe Zähigkeit sowie eine gute Haftung auf den meist metallischen Substraten, insbesondere Aluminium, aufweisen.

Die vorliegende Erfindung basiert auf der Erkenntnis der Erfinder, dass eine Zusammensetzung auf Basis von aromatischen Epoxidharzen, die zusätzlich Core-Shell-Partikel als Zähigkeitsvermittler, einen Flexibilisator und einen kationischen Photoinitiator enthält, die gewünschten Eigenschaften aufweist, d.h. ein Epoxidharzsystem bereitstellt, dass sowohl eine hohe Flexibilität als auch eine hohe Zähigkeit und gleichzeitig gute Adhäsionseigenschaften auch auf metallischen Substraten sowie eine ausreichend hohe Reaktivität um kurze Herstellungszyklen zu gewährleisten besitzt.

In einem ersten Aspekt richtet sich die vorliegende Erfindung daher auf Verwendung einer photohärtbaren Epoxidharzzusammensetzung als Versiegelungsmaterial zur Versiegelung von metallhaltigen elektrischen Leitungen oder Kontakten zum Schutz vor elektrochemischer Korrosion, wobei die photohärtbare Epoxidharzzusammensetzung
(a) 30 bis 90 Gew.-%, vorzugsweise 50 bis 85 Gew.-%, mindestens eines aromatischen Epoxidharzes;
(b) 2 bis 30 Gew.-%, vorzugsweise 5 bis 15 Gew.-%, mindestens eines Core-Shell-Partikels als Zähigkeitsvermittler;
(c) 1 bis 20 Gew.-%, vorzugsweise 5 bis 10 Gew.-%, mindestens eines Flexibilisators, der reaktive funktionelle Gruppen ausgewählt aus Epoxid-, Carboxylat-, Amino und/oder Hydroxylgruppen aufweist; und
(d) 1 bis 4 Gew.-%, vorzugsweise 1,5 bis 2,5 Gew.-%, mindestens eines kationischen Photoinitiators, vorzugsweise umfassend ein Sulfonium- und/oder lodoniumsalz, enthält.

In noch einem anderen Aspekt erfasst die Erfindung auch ein Verfahren zur Versiegelung von metallhaltigen elektrischen Leitungen oder Kontakten zum Schutz vor elektrochemischer Korrosion, umfassend:
(i) Auftragen der hierin beschriebenen photohärtbaren Epoxidharzzusammensetzung auf metallhaltigen elektrischen Leitungen oder Kontakte in Form eines Films; und
(ii) Aushärten des Films durch Bestrahlung mit Licht.

"Mindestens ein", wie hierin verwendet, bedeutet 1 oder mehr, beispielsweise 2, 3, 4, 5, 6, 7, 8, 9 oder mehr. Im Kontext mit einem Bestandteil der Zusammensetzung bezieht sich die Angabe auf die Art des Bestandteils, d.h. "mindestens ein aromatisches Epoxidharz" bedeutet beispielsweise, dass die Zusammensetzung eine Art von aromatischem Epoxidharz oder mehrere verschiedene aromatische Epoxidharze enthalten kann.

Alle Prozentangaben beziehen sich, sofern nicht anders angegeben auf Gew.-% jeweils bezogen auf die Gesamtzusammensetzung. Im Zusammenhang mit "mindestens einer" Art von Bestandteil, bezieht sich die Angabe auf die Gesamtmenge der angegebenen Art von Bestandteil in der Zusammensetzung, d.h. "30 bis 90 Gew.-% mindestens eines aromatischen Epoxidharzes" bedeutet beispielsweise, dass die Zusammensetzung insgesamt 30-90 Gew.-% an aromatischen Epoxidharzen enthält.

Alle Sachverhalte, Gegenstände und Ausführungsformen, die hierin im Folgenden für die Harzzusammensetzungen beschrieben sind, sind auch auf die beschriebenen Verwendungen und Verfahren anwendbar und umgekehrt.

### Epoxidharz

Die hierin verwendbaren aromatischen Epoxidharze sind vorzugsweise Polyglycidylepoxid-Verbindungen oder Epoxid-Novolake. Geeignete Polyglycidylepoxide schließen ein, ohne darauf beschränkt zu sein, Polyglycidylether, Poly(β-methylglycidyl)ether, Polyglycidylester und Poly(β-methylglycidyl)ester. Beispiele für solche Polyglycidylether und Poly(β-methylglycidyl)ether sind solche auf Basis von monocyclischen Phenolen, wie Resorcinol oder Hydrochinon, und polycyclischen Phenolen wie Bis(4-hydroxyphenyl)methan (Bisphenol F), 2,2-Bis(4-hydroxyphenyl)propane (Bisphenol A), Bis(4-hydroxyphenyl)sulfon (Bisphenol F), wobei die vorgenannten optional substituiert sein können, beispielsweise mit Alkoxy- oder Halogenresten, sowie Phenol- und Cresol-Novolake. Geeignete Polyglycidylester und Poly(β-methylglycidyl)ester können durch Reaktion von Epichlorhydrin, 1,3-Dichlorhydrin oder β-Methylepichlorhydrin mit aromatischen Polycarbonsäuren, wie beispielsweise Phthalsäure, Isophthalsäure, Terephthalsäure, Trimellitsäure und Pyromellitsäure herstellt werden. Geeignet sind ebenfalls Mischungen der vorgenannten aromatischen Epoxidharze. Bevorzugt weisen die Epoxidharze im Mittel mehr als eine, vorzugsweise mindestens 2 Epoxidgruppen pro Molekül auf.

Das mindestens eine aromatische Epoxidharz wird in verschiedenen Ausführungsformen ausgewählt aus Diglycidylethern basierend auf Bisphenol A, F und/oder S und Epoxid-Novolaken und Mischungen davon, insbesondere aus Bisphenol-A-Digylcidylethern und Bisphenol-F-Digylcidylethern und Mischungen davon.

Bevorzugt weißt das aromatische Epoxidharz ein Epoxidäquivalentgewicht 120 bis 1000 g/eq, besonders bevorzugt 120 bis 600 g/eq, ganz besonders bevorzugt 150 bis 250 g/eq auf (bestimmbar gemäß DIN 16945).

In den hierin beschriebenen Zusammensetzungen bilden die aromatischen Epoxidharze das Basisharz. Üblicherweise machen sie dabei 30 bis 90 Gew.-%, insbesondere 50 bis 85 Gew.-% der gesamten Epoxidharzzusammensetzung aus. Der Anteil der aromatischen Epoxidharze beträgt mindestens 30 Gew.-%, insbesondere mindestens 40 Gew.-%, bevorzugt mindestens 50 Gew.-%, besonders bevorzugt mindestens 60 Gew.-% und höchstens 90 Gew.-%, insbesondere höchstens 85 Gew.-%, bevorzugt höchstens 80 Gew.-%, jeweils bezogen auf die gesamte Zusammensetzung. Die bevorzugten Anteile an aromatischen Epoxidharzen sind besonders von Vorteil in Hinblick auf Flexibilität und Zähigkeit.

### Zähigkeitsvermittler (Toughener)

Bei den erfindungsgemäß eingesetzten Zähigkeitsvermittlern handelt es um Core-Shell-Partikel (CSR; Core-Shell-Kautschukpartikel; Core-Shell rubbers). In verschiedenen Ausführungsformen der Erfindung handelt es sich bei den Zähigkeitsvermitteln um Core-Shell-Partikel, die in einer Harzmatrix, insbesondere einer Epoxidharzmatrix dispergiert vorliegen können. Die Epoxidharzmatrix enthält vorzugsweise aromatische Epoxidharze, wobei die aromatischen Epoxidharze der Matrix in besonders bevorzugten Ausführungsformen aus denen, die oben im Zusammenhang mit dem aromatischen Epoxidbasisharz offenbart wurden ausgewählt wurden. Insbesondere umfassen geeignete Matrixmaterialien Epoxid-Novolake, Epoxid-gruppen enthaltende Biphenole, insbesondere Digylcidylether basierend auf Bisphenol A, F oder S. In verschiedenen Ausführungsformen sind die Core-Shell-Partikel in einer solchen Matrix dispergiert, wobei die Matrix vorzugsweise ausgewählt wird aus aromatischen Epoxidharzen, insbesondere Diglycidylethern basierend auf Bisphenol A, F und/oder S und Epoxid-Novolaken. Falls die Core-Shell-Partikel in einer aromatischen Epoxidharzmatrix vorliegen, zählt die Menge an aromatischen Epoxidharz zu dem Anteil der gesamten aromatischen Epoxidharze in der Zusammensetzung.

In verschiedenen Ausführungsformen weist die (Polymer-)Zusammensetzung, die die Schale des Core-Shell-Partikels bildet, eine ausreichende Affinität gegenüber dem als Matrix und/oder Basisharz verwendeten Epoxidharz auf, so dass die Partikel als stabil dispergierte, primäre Partikel im Epoxidharz vorliegen.

Bevorzugt besteht sowohl der Kern als auch die Schale des Core-Shell Partikels aus einem Polymer mit Glasübergangstemperaturen von vorzugsweise weniger als 0°C, bevorzugt -30°C oder niedriger. Die Glasübergangstemperatur kann mittels DSC bestimmt werden (gemäß DIN EN ISO 11357 bei einer Heizrate von 10°C/min).

Die Core-Shell Partikel weisen dabei bevorzugt eine Größe von 0,03 bis 50 µm, besonders bevorzugt 1 bis 20 µm, ganz besonders bevorzugt weniger als 5 µm auf. Üblicherweise weist ein Core-Shell Partikel sogar nur einen durchschnittlichen Durchmesser von 500 nm oder weniger als 200 nm auf, so etwa von 25 bis 200 nm oder von 50 bis 150 nm.

Vorzugsweise besteht das Kernmaterial eines CSR aus einem Dien-Homopolymer oder einem Copolymer mit elastomeren Eigenschaften, wie beispielsweise einem Homopolymer von Butadien oder Isopren, einem Copolymer von Butadien oder Isopren mit einem oder mehreren ethylenisch - ungesättigten Monomer(en), wie beispielsweise Vinyl-aromatische Monomer(en), (Meth)Acrylnitril und/oder (Meth)Acrylat. Bevorzugte Polymere als Kernmaterial sind ausgewählt aus Polybutadien, Polybutylacrylat, Polydimethylsiloxan, Polyacrylaten, Polymethacrylaten, Poly(meth)acrylsäuren und Poly(meth)acrylsäureestern sowie deren Co- oder Terpolymere mit Polystryol, Polyacrylnitril oder Polysulfid, ganz besonders bevorzugt aus Polybutadien, Polydimethylsiloxan oder Polybutylacrylat. Ebenfalls als Kernmaterial geeignet sind elastomere Polysiloxane, wie beispielsweise Polydimethylsiloxan oder quervernetztes Polydimethylsiloxan.

Als Schalenmaterial werden vorzugsweise die bereits oben als Kernmaterial offenbarten Dien-Homo- und Copolymere eingesetzt.

Die Core-Shell-Kautschukpartikel können aus mehreren Schichten, beispielsweise aus mehr als zwei Schichten bestehen. Vorzugsweise weist ein solcher CSR einen zentralen Kern auf, der aus einem ersten Dien-Homopolymer oder Copolymer mit elastomeren Eigenschaften besteht, der von einem zweiten Kern aus einem zweiten (anderen) Dien-Homopolymer oder Copolymer mit ebenfalls elastomeren Eigenschaften umschlossen wird.

Falls als Schalenmaterial ein Polymer oder ein Copolymer mit nicht elastomeren Eigenschaften (bevorzugt ein thermoplastisches oder duroplastisches/vernetzendes Polymer) verwendet werden soll, sind derartige Polymere beispielsweise ausgewählt aus Polystyrol, Poly(meth)acrylamid, Polyacrylnitril, Polyacrylat- und Polymethacrylat-Mono-, -Co- oder -Terpolymeren oder Styrol/Acrylnitril/Glycidylmethacrylat-Terpolymeren oder aus einem Polymer oder einem Copolymer aus einem oder mehreren Monomeren von ungesättigten Säuren und Anhydriden (beispielsweise Acrylsäure).

In verschiedenen Ausführungsformen der vorliegenden Erfindung weisen die eingesetzten CSR einen Kern und mindestens zwei konzentrische Schalen mit unterschiedliche chemische Zusammensetzungen und/oder Eigenschaften auf.

Bevorzugt sind Partikel, die einen Kern aus Polybutadien und eine Schale aus Polybutadien, Polystyrol oder einem Polybutadien-Polystyrol-Copolymer aufweisen.

Geeignete CSR sind beispielsweise bei Kaneka kommerziell erhältlich und liegen in Form von phasenseparierten Partikeln, die in Epoxidharzen dispergiert sind, vor. Diese Partikel haben einen Kern aus einem Copolymer von (Meth)Acrylat-Butadien-Styrol, wobei Butadien die primäre Komponente des Copolymers des Kerns ist.

Weitere kommerziell erhältliche Vormischungen von Core-Shell Kautschukpartikeln, die in Epoxidharzen dispergiert sind, sind beispielsweise das Produkt Genioperl M23A von Wacker (eine Dispersion von 30 Gew.-% CSR in einem aromatischen Epoxidharz, welches auf Bisphenol A Diglycidylether basiert; die CSR weisen einen durchschnittlichen Durchmesser von ca. 100 nm auf und enthalten einen Kern aus elastomerem vernetztem Silikon, auf den ein Epoxid-funktionelles Acrylat-copolymer aufgepropft ist).

Die Herstellung der CSR ist bekannt. Vorzugsweise sind CSR erhältlich durch Emulsionpolymerisation, Suspensionspolymerisation oder Mikro-Suspensionpolymerisation, bevorzugt durch Emulsionpolymerisation. Bevorzugt wird die Schale dabei auf den Kern aufgepfropft. Das (Gew.-%) Verhältnis von Kernschicht:Schalenschicht in den CSR beträgt bevorzugt 50:50 bis 95:5, besonders bevorzugt 60:40 bis 90:10.

Bevorzugt verwenden die Core-Shell-Partikel in der Form eingesetzt, dass die Core-Shell-Partikel vor dem Eintrag in die Zusammensetzung in einer Harzmatrix, insbesondere einer Epoxidharzmatrix, bevorzugt einer aromatischen Epoxidharzmatirx dispergiert vorliegen. Dabei beträgt der Anteil der CS-Partikel vorzugsweise etwa 5 bis 40 Gew.-%, bevorzugt 8 bis 30 Gew.-%, wobei der Rest im Wesentlichen oder ausschließlich aus der Matrix besteht. Somit ist eine bevorzugte Ausführungsform, wenn als Zähigkeitsvermittler Core-Shell-Partikel in einer Harzmatrix, insbesondere einer Epoxidharzmatrix, bevorzugt einer aromatischen Epoxidharzmatirx verwendet werden. Wenn die Core-Shell-Partikel bereits in einer Harzmatrix vorliegen, führt dies einfacher zu homogeneren Zusammensetzungen und es resultieren gleichmäßigere Produkteigenschaften, vor allem in Hinblick auf Flexibilität und Zähigkeit.

Es können auch Mischungen von unterschiedlichen CSR (mit unterschiedlicher Partikelgröße, Glasübergangstemperaturen, Kernpolymer, Schalenpolymer) eingesetzt werden.

Üblicherweise beträgt das Verhältnis vom gesamten aromatischen Epoxidharz als Basisharz zu Core-Shell-Partikeln bevorzugt nicht weniger als 1:1 und nicht mehr als 40:1, bevorzugt 3:1 bis 20:1 oder 5:1 bis 15:1. Das Verhältnis von Matrix (Epoxid-basierte Präpolymere):CSR beträgt vorzugsweise nicht weniger als 0,2:1 und nicht mehr als 5:1, bevorzugt 1:1 bis 3:1.

In verschiedenen Ausführungsformen enthält die beschriebene Epoxidharzzusammensetzung daher 2 bis 30 Gew.-%, vorzugsweise 5 bis 15 Gew.-%, jeweils bezogen auf die Gesamtzusammensetzung, mindestens eines der oben beschriebenen Core-Shell-Partikel. Der Anteil der CS-Partikel beträgt mindestens 2 Gew.-%, insbesondere mindestens 3 Gew.-%, bevorzugt mindestens 5 Gew.-%, und höchstens 30 Gew.-%, insbesondere höchstens 20 Gew.-%, bevorzugt höchstens 15 Gew.-%, besonders bevorzugt höchstens 10 Gew.-%, jeweils bezogen auf die gesamte Zusammensetzung. Die bevorzugten Anteile sind besonders von Vorteil in Hinblick auf Flexibilität und Zähigkeit.

Zusätzlich zu den oben beschriebenen CSR kann die erfindungsgemäße Zusammensetzung noch andere Zähigkeitsvermittler enthalten, beispielsweise solche die unten als Co-Zähigkeitsvermittler (Co-Toughener) beschrieben werden.

### Flexibilisator

Bei den hierin verwendeten Flexibilisatoren handelt es sich um Verbindungen, die reaktive funktionelle Gruppen ausgewählt aus Epoxid-, Carboxylat-, Amino und/oder Hydroxylgruppen aufweisen und in der Lage sind mit anderen Verbindungen der Zusammensetzung im Härtungsverlauf zu reagieren. Wie vorher beschrieben handelt es sich bei den Flexibilisatoren um eine zusätzliche Komponente, die insbesondere unterschiedlich zu den aromatischen Epoxidharzen ist, weshalb insbesondere die Flexibilisatoren keine aromatischen Epoxidharze sind.

Geeignete Flexibilisatoren schließen beispielsweise ein, ohne darauf beschränkt zu sein, Polymere und Oligomere mit einer Glasübergangstemperatur von unter 20°C (bevorzugt unter 0°C oder unter -30°C oder -50°C), die die oben genannten reaktiven funktionellen Gruppen aufweisen und in der Lage sind mit anderen Verbindungen der Zubereitung im Härtungsverlauf zu reagieren.

Als Flexibilisatoren sind insbesondere Epoxid- und Hydroxylgruppen enthaltende Verbindungen bevorzugt.

Geeignet sind beispielsweise Epoxidverbindungen, die auch als Reaktivverdünner eingesetzt werden können aber ein besonders flexibles Backbone aufweisen, wie beispielsweise Monoglycidylether, d.h. Glycidylether von einwertigen Phenolen oder Alkoholen, oder Polyglycidylether oder -ester, beispielsweise Diglycidylether oder -ester von aliphatischen Diolen oder Dicarbonsäuren, oder auch cycloaliphatische Epoxidharze wie beispielsweise (Di-)Ether oder (Di-)Ester auf Basis von 3,4-Epoxycyclohexyl-methanol. Bevorzugt sind Monoglycidylether eines Phenols oder (3,4-Epoxycyclohexan-1-yl)methylester einer monobasischen oder dibasischen Carbonsäure. Bevorzugt sind vor allem aliphatische oder cycloaliphatische Epoxidverbindungen.

Beispiele derartiger Verbindungen, die als Flexibilisator geeignet sind, schließen ein, aber sind nicht beschränkt auf Monoglycidylethern von Cardanolen und Diestern auf Basis von 3,4-Epoxycyclohexyl-methanol, beispielsweise Bis((3,4-Epoxycyclohexyl)methyl)adipat.

Ebenfalls geeignet und erfindungsgemäß bevorzugt sind Hydroxylgruppen-enthaltende Verbindungen, insbesondere primäre Hydroxylgruppen-enthaltende Verbindungen. Diese haben vorzugsweise eine Funktionalität von mindestens 1, bevorzugt mindestens 2 und sind frei von Gruppen, die die Härtungsreaktion inhibieren können. Die Hydroylgruppen-haltigen Verbindungen können aliphatische oder aromatische Verbindungen sein. Beispiele sind Polyesterpolyole, Polyetherpolyole und Polyester/Polyetherpolyole, Hydroxyl- und Hydroxyl-/Epoxy-funktionalisierte Polybutadiene, Polycaprolactondiole oder -triole und Ethylene/Butylene Polyole. Vorzugsweise weisen die Hydroxylgruppen-enthaltenden Flexibilisatoren ein gewichtsmittleres Molekulargewicht von 200 bis 5000, bevorzugt 300 bis 2500 g/mol (bestimmbar mittels GPC gegen einen Polystyrolstandard). Bevorzugt tragen die Hydroxylgruppen-enthaltenden Flexibilisatoren mindestens 2 OH Gruppen pro Molekühl, vorzugsweise 2,2 bis 4.

In verschiedenen Ausführungsformen wird der mindestens eine Flexibilisator ausgewählt aus der Gruppe bestehend aus Polytetramethylenetherglycol ("poly THF") und Polycaprolactondiol oder-triol, vorzugsweise Polycaprolactontriol.

Poly THF hat vorzugsweise ein gewichtsmittleres Molekulargewicht im Bereich von 250 - 2500 und ist vorzugsweise hydroxyl-terminiert, kann aber auch epoxy-terminiert sein. Kommerziell erhältliche Caprolacton-basierte Oligo- oder Polyester schließen beispielsweise die bevorzugten Trimethylolpropan-Triester mit Caprolacton ein.

In verschiedenen bevorzugten Ausführungsformen weist der mindestens eine Flexibilisator eine ausreichende Affinität gegenüber dem als Basisharz verwendeten Epoxidharz auf, um in diesem löslich zu sein und keine separate Phase auszubilden.

Es können auch Mischungen von unterschiedlichen Flexibilisatoren, wie oben definiert, eingesetzt werden.

Die Menge an mindestens einem Flexibilisator, wie oben definiert, in den beschriebenen Zusammensetzungen beträgt 1 bis 20 Gew.-%, vorzugsweise 5 bis 10 Gew.-% jeweils bezogen auf die Gesamtzusammensetzung.

### Photoinitiator

Die hierin beschriebenen Zusammensetzungen sind "photohärtbar", d.h. sie werden durch eine durch Licht initiierte Polymerisationsreaktion gehärtet. Dabei werden die Zusammensetzungen kationisch mit Hilfe eines kationischen Photoinitiators, der bei der Absorption einer bestimmten Lichtwellenlänge Kationen bildet, polymerisiert.

Der kationische Photoinitiator kann einer der üblicherweise für die kationische Polymerisation verwendeten sein. Beispiele schließen Oniumsalze mit Anionen niedriger Nukleophilität ein, wie z.B. Haloniumsalze, lodoniumsalze, Sulfoniumsalze, Sulfoxoniumsalze oder Diazoniumsalze. Geeignete Anionen schließen beispielsweise Hexafluoroantimonat, Hexafluorophosphat oder Tetrakis-(pentafluorophenyl)borat ein. Bevorzugt sind Sulfonium- und lodoniumsalzen, wobei das Gegenion ausgewählt wird aus Hexafluoroantimonat, Hexafluorophosphat und (Tetrakis-(pentafluoroaryl))boraten, insbesondere aus Triarylsulfonium- und Bis(alkylphenyl)iodoniumsalzen.

Beispiele von kommerziell erhältlichen Photoinitiatoren, die erfindungsgemäß geeignet sind, schließen ein, aber sind nicht beschränkt auf UV 1242 (Bis(dodecylphenyl)iodonium-hexafluoroantimonat)), UV 2257 (Bis(4-methylphenyl)iodonium-hexafluorophosphat)), Irgacure 290 (Triarylsulfoniumborat) (BASF SE) und Cyracure UVI 9676 (Triarylsulfoniumhexafluoroantimonat) (Dow Chemicals). Besonders bevorzugt ist UV 2257.

Die oben beschriebenen Photoinitiatoren können einzeln oder als Mischung eingesetzt werden, vorzugsweise in Mengen von 1 bis 4 Gew.-%, vorzugsweise 1,5 bis 2,5 Gew.-%, jeweils bezogen auf das Gesamtgewicht der Zusammensetzung.

### Weitere Bestandteile

Weiterhin kann die erfindungsgemäße Zubereitung weitere zusätzliche Inhaltsstoffe wie beispielsweise Haftvermittler, Co-Zähigkeitsvermittler, Reaktivverdünner, Füllstoffe, Farbstoffe, Pigmente, Dispergiermittel, Entschäumer, Antioxidantien, Flammschutzmittel, Thixotropiermittel, Stabilisatoren, Rheologie-Modifikatoren (beispielsweise pyrogene Kielselsäure), Alterungs- und/oder Korrosionsinhibitoren enthalten.

Als Haftvermittler können beispielsweise ein oder mehrere Reaktionsprodukte von Epoxidharzen mit Verbindungen, die Chelat-funktionelle Gruppen enthalten (sogenannte Chelat-modifizierte Epoxidharze), verwendet werden.

Solche Reaktionsprodukte umfassen Substanzen, die bekannt sind als Chelatepoxide oder Chelat-Epoxidharze. Die Chelat-funktionellen Gruppen umfassen diejenigen funktionalen Gruppen, die in der Lage sind Chelat-Bindungen mit divalenten oder polyvalenten Metallatomen auszubilden, entweder durch sich selber oder mit anderen funktionellen Gruppen, die ebenfalls im Molekül positioniert sind.

Geeignete Chelat-funktionelle Gruppen umfassen, vorzugsweise Phosphorsäuregruppen, z.B. -PO(OH)₂), Carbonsäuregruppen (-COOH), Schwefelsäuregruppen (-SOsH), Aminogruppen und Hydroxylgruppen (insbesondere benachbarte Hydroxylgruppen in einem aromatischen Ring). Die Herstellung solcher (Chelat-)Reaktionsprodukte ist bekannt.

Reaktionsprodukte von Epoxidharzen und Komponenten, die Chelat-funktionelle Gruppen aufweisen, sind beispielsweise unter den Produktnamen ADEKA Resins EP-4910N, EP-49-55C, EP-49-10, EP-49-20, EP-49-23 und EP-49-25 kommerziell erhältlich (Asahi Denka).

Ebenfalls als Haftvermittler einsetzbar sind Epoxy-modifizierte Silane, wie Gylcidoxyalkylmodifizierte Silane, insbesondere Trimethoxysilane, vorzugsweise Glycidoxypropyltrimethoxysilan. Derartige Silane sind beispielsweise als Silquest^{™} A-187 kommerziell erhältlich.

Üblicherweise enthalten erfindungsgemäße Zubereitungen bevorzugt 0,1 Gew.-% bis 3 Gew.-%, noch bevorzugter 0,5 bis 2 Gew.-% Haftvermittler bezogen auf die Gesamtzubereitung. Chelat-modifizierte Epoxidharze werden vorzugsweise in Mengen von 1-2 Gew.-% eingesetzt, die beschriebenen Silane in Mengen von 0,2 bis 1 Gew.-%, vorzugsweise ungefähr 0,5 Gew.-%.

Die Reaktivverdünner, soweit Sie nicht zu den Flexibilisatoren zählen, können erfindungsgemäß in Mengen von 0,1-10 Gew.-%, besonders bevorzugt 5-10 Gew.-%, jeweils bezogen auf die Gesamtzusammensetzung, eingesetzt werden. Bevorzugte Reaktivverdünner in verschiedenen Ausführungsformen sind ausgewählt aus Monoglycidylethern von aliphatischen oder aromatischen Alkoholen, insbesondere C12/C14-Fettalkoholen und Alkylphenolen, vorzugsweise para-tert-Butylphenol, und Oxetanen, insbesondere Trimethylolpropanoxetan (TMPO). Bevorzugt sind Monoglycidylether von aromatischen Alkoholen und insbesondere bevorzugt niedermolekulare Oxetane wie TMPO.

Die Zusammensetzungen, die hierin beschrieben werden, können ferner Co-Zähigkeitsvermittler enthalten, insbesondere in Mengen von 0,1-10 Gew.-%, besonders bevorzugt 0,5-2,5 Gew.-%, jeweils bezogen auf die Gesamtzusammensetzung.

Geeignete Co-Zähigkeitsvermittler (Co-Toughener) können ausgewählt werden aus hydroxylterminierten Polymeren, vorzugsweise mit niedrigem Tg (Glasübergangstemperaturen von vorzugsweise weniger als 0°C, bevorzugt -30°C oder niedriger), beispielsweise Polyetherpolyolen, insbesondere Block Copolymeren von verschiedenen Polyetherpolyolen, wobei vorzugsweise ein Block des Copolymers nicht in dem Epoxidbasisharz löslich ist und der andere Block in dem Epoxidbasisharz löslich ist, so dass zwei Phasen ausgebildet werden. Ein Beispiel für eine geeignete Verbindung ist ein Polypentylen-Polyethylenglykol-Block Copolymer, wie es unter dem Handelsnamen Fortegra^{™} 100 kommerziell erhältlich ist.

Vorteilhaft ist es weiterhin, wenn die Zusammensetzungen einen Fluoreszenzmarker enthalten, bevorzugt in Mengen von 0,01 bis 1 Gew.-%, besonders bevorzugt von 0,05 bis 0,5 Gew.-%, jeweils bezogen auf die gesamte Zusammensetzung. Durch den Einsatz von Fluoreszenzmarkern kann eine Qualitätskontrolle des Produktes erfolgen, ohne dabei die Flexibilität und Toughness zu beeinträchtigen. Beispiele bevorzugter Fluoreszenzmarker sind 4,4'-bis(2-Sulfostyryl)-biphenyl dinatriumsalz (erhältlich von BASF unter Tinopal^{®} NFW liquid): 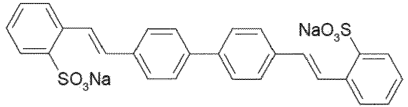 oder Tinopal^{®} OB (BASF): 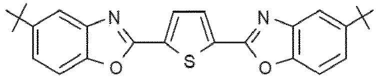 wobei 4,4'-bis(2-Sulfostyryl)-biphenyl dinatriumsalz besonders bevorzugt wird.

Bevorzugt enthalten die erfindungsgemäßen Zusammensetzungen weiterhin einen Photosensitizer. Der Photosensitizer ermöglicht dabei, dass der eingesetzte Photoinitiator effektiver, über einen breiteren Wellenlängenbereich und/oder bei anderen Wellenlängen des Lichts, insbesondere bei anderen Wellenlängen angeregt werden kann, ohne dabei selber als Photoinitiator zu fungieren. Beispielsweise benötigen Photoinitiaoren, die auf einem lodoniumsalz basieren, für ihre Anregung UV-Licht mit einer Wellenlänge < 280 nm (UV-C Bereich). Um eine Aktivierung bei höherer Wellenlänge zu ermöglichen, werden Photosensitizer zugefügt, welche bei höheren Wellenlängen (UV-A Bereich) angeregt werden. Das angeregt Molekül, Photosensitizer, geht einen "Energie-Komplex" mit dem Photoinitiator ein, welcher die Polymerisation des Epoxids startet. Bevorzugte Beispiele sind 9,10-Dibutoxyanthracen, Isopropylthioxanthon und 2-Ethyl-9,10-dimethoxyanthracen.

Vorzugsweise beträgt der Anteil des Photosenzitizers 0,01 bis 2 Gew.-%, besonders bevorzugt 0,1 bis 1 Gew.-%, jeweils bezogen auf die gesamte Zusammensetzung. Die Flexibilität und Zähigkeit der Systeme wird dabei nicht beeinflusst bzw. kann gezielt mit dem eingesetzten Photoinitiator-Photosensitizer-System eingestellt werden, wobei das Verhältnis von Photoinitiator zu Photosensitizer bevorzugt 20:1 bis 1:1, insbesondere 5:1 bis 2:1 beträgt.

Die hierin beschriebenen Zusammensetzungen können mit den im Stand der Technik bekannten Verfahren hergestellt werden.

Vorzugsweise werden zur Herstellung der erfindungsgemäßen Zusammensetzungen das Basisharz und der Zähigkeitsvermittler in einem Rührer unter Vakuum bei Raumtemperatur vermengt. Dem Gemisch werden Flexibilisator und ggf. Reaktivverdünner zugegeben und erneut unter Vakuum bei Raumtemperatur verrührt. Anschließend wurde der Photoinitiator zugefügt und unter Vakuum verrührt. Erfolgte die Zugabe eines Haftvermittlers wurde dieser in einem letzten Schritt zugefügt und das Gemisch bei Raumtemperatur unter Vakuum erneut vermischt. Erfolgt die Zugabe eines Fluoreszenzmarkers und/oder Photosenzitizer wurden diese abschließend hinzugegeben und das Gemisch bei Raumtemperatur unter Vakuum erneut vermischt.

In einer bevorzugten Ausführungsform des Herstellungsverfahrens werden Core-Shell-Partikel als Zähigkeitsvermittler verwenden, die vor dem Einbringen in das Basisharz in einer Harzmatrix, insbesondere einer Epoxidharzmatrix, bevorzugt einer aromatischen Epoxidharzmatirx vorliegen.

### Anwendung

Ein weiterer Gegenstand der vorliegenden Erfindung ist die Verwendung der erfindungsgemäßen Zusammensetzung als Beschichtungs- oder Versiegelungsmittel, insbesondere von elektrischen Leitungen und Kontakten, vorzugsweise solchen die aus Metallen bestehen oder diese enthalten. Besonders bevorzugt ist die Verwendung der Zusammensetzung zum Beschichten oder Versiegeln von Aluminium-Substraten.

Ein derartiger Überzug schützt das darunter liegende Material beispielsweise vor elektrochemischer Korrosion.

Zur Zweck der Versiegelung oder Beschichtung von metallhaltigen elektrischen Leitungen oder Kontakten zum Schutz vor elektrochemischer Korrosion kann die hierin beschriebene photohärtbare Epoxidharzzusammensetzung auf metallhaltige elektrische Leitungen oder Kontakte, beispielsweise in Form eines Films, aufgetragen werden. Das Auftragen kann mit bekannten Verfahren, beispielsweise durch Aufsprühen, Tauchen, etc. erfolgen. Das anschließende Härten der Zusammensetzung erfolgt dann durch Licht initiierte kationische Polymerisation. Bei dem Licht, das zum Starten der Polymerisationsreaktion eingesetzt wird handelt es sich vorzugsweise um kurzwelliges Licht, beispielsweise UV-Licht.

Die mit den hierin beschriebenen Zusammensetzungen beschichteten oder versiegelten Produkte, d.h. insbesondere elektrische Leitungen oder Kontakte, enthalten vorzugsweise Aluminium oder bestehen aus Aluminium. Die folgenden Beispiele dienen der näheren Erläuterung der Erfindung.

### Beispiele:

### Materialien:

### Epoxid-Basisharz:

### Aromatisches Epoxidharz aE1: Blend aus BADGE (Bisphenol-A-Diglycidylether) und BFDGE (Bisphenol-F-Diglycidylether)

Cycloaliphatisches Epoxidharz cE2: (3,4-Epoxycyclohexylmethyl-3,4-epoxycyclohexanecarboxylat)

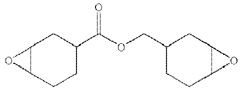

### Core-Shell (CS)-Materialien:

CS1: BFDGE + 25% CS (Polybutadien)
CS2: BADGE + 25% CS (Styrol-Butadien-Copolymer)
CS3: Cycloaliphatisches Epoxidharz (ERL 4221) + 25% CS (Styrol-Butadien-Copolymer)

Vor allem CS1 und CS2 führen zu Produkten mir hervorragender Flexibilität und Zähigkeit.

Co-Toughener: Fortegra 100 (Polyol-Derivat). Als ideal identifizierte Konzentration für gute Zähigkeit und Flexibilität bei gleichzeitig hoher Reaktivität: 2%

### Flexibilisatoren:

F1: monofunktionelles Epoxid basierend auf Cardanol
F2: Caprolactontriol (Mw -300 g/mol)
F3: Bis(3,4-epoxycyclohexyl)methyl)adipate
F4: Polytetramethylenetherglycol (Mw -1400 g/mol)

Alle Flexibilisatoren F1 bis F4 eignen sich zur Herstellung von flexiblen und entsprechend zähen Filmen. Beste Ergebnisse bezüglich Flexibilisierung wurden unter Einsatz des Flexibilisators F2 erhalten, ebenfalls Flexibilisator F4 führte zu stark erhöhter Flexibilität. Als ideal identifizierte Konzentration in Bezug auf F2: 10%

### Reaktivverdünner

R1: Monofunctioneller Glycidylether von para-tert-Butylphenol
R2: Aliphatischer Monoglycidylether von C₁₂/C₁₄-Fettsäurealkohol
R3: Trimethylolpropanoxetan (TMPO)

Standard-Reaktivverdünner ist R1. R2 wurde eingesetzt, da R2 eine geringere Viskosität verglichen zu R1 aufweist, allerdings sind die resultierenden Filme minimal spröder. R3 wurde eingesetzt, um Reaktionsgeschwindigkeit des Systems zu erhöhen (Oxetane reaktiver, OH-Gruppe beschleunigt Polymerisation zusätzlich); zusätzlich wurde festgestellt, dass durch Einsatz von R3 Flexibilität und Zähigkeit gesteigert wird.

### Photoinitiatoren (PI):

Cyracure UVI 9676: Triaryl-sulfoniumhexafluoro-antimonat (50 wt.-% in Propylencarbonat gelöst; Dow Chemicals):

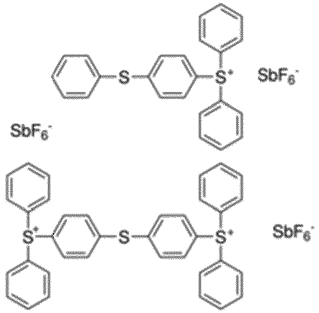

Irgacure 290: Triarylsulfonium-borat (100%; BASF):

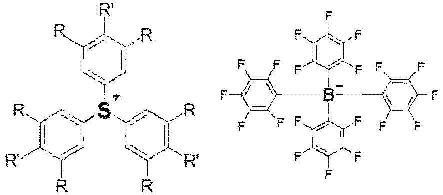

UV 1242: Bis(dodecylphenyl)-iodoniumhexafluoro-antimonat (50 wt.-% in C12/C14-Glycidylether; Deuteron):

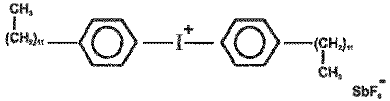

UV 2257: Bis-(4-methyl-phenyl)-iodoniumhexafluorophosphat (50 wt.-% in Propylencarbonat; Deuteron):

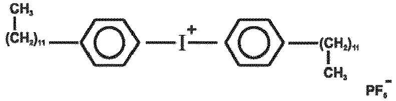

Mit allen vier eingesetzten Photoinitiatoren konnten flexible, zähe Systeme erhalten werden. Beste Ergebnisse bezüglich Flexibilität und Zähigkeit wurde für PI-Konzentrationen von 1% für ungelöste PI (Irgacure 290) bzw. 1.5% - 2% für gelöste PI (Cyracure UVI6976; UV 1242 und UV 2257) erzielt.

### Haftvermittler:

H1: chelat-modifziertes Epoxidharz
H2: 3-Glycidoxypropyl)trimethoxysilan

### Beispiel 1:

Zur Herstellung der erfindungsgemäßen Zusammensetzungen wurden das Basisharz und der Zähigkeitsvermittler in einem Rührer unter Vakuum bei Raumtemperatur vermengt. Dem Gemisch wurden Flexibilisator und ggf. Reaktivverdünner zugegeben und erneut unter Vakuum bei Raumtemperatur verrührt. Anschließend wurde der Photoinitiator zugefügt und unter Vakuum verrührt. Erfolgte die Zugabe eines Haftvermittlers wurde dieser in einem letzten Schritt zugefügt und das Gemisch bei Raumtemperatur unter Vakuum erneut vermischt.

Zur Überprüfung von Flexibilität und Zähigkeit wurden dünne Filme hergestellt, die mittels UVA-LOC 1000 ausgehärtet wurden (30 s, 1000 W, Fe-dotierte Quecksilberlampe). Um eine vollständige Härtung zu gewährleisten wurden die Filme anschließend 30 min bei 100 °C im Ofen nachgehärtet. Die Filme wurden dann händisch auf Flexibilität und Zähigkeit getestet.

Es wurden die folgenden Zusammensetzungen hergestellt, die sich durch besonders gute Ergebnisse bezüglich Flexibilität und Zähigkeit bei guter Reaktivität und Haftung auszeichneten:

| Probe | 1 | 2 | 3 | 4 |
|---|---|---|---|---|
| Aromatisches Epoxidharz aE1 | 58,8 | 49 | 48 | 48,25 |
| Core-Shell-Material CS1 | 29,4 | 29,4 | 28,8 | 28,95 |
| Co-Toughener | | | 2 | 2 |
| Flexibilisator F2 | 9,8 | 9,8 | 9,6 | 9,65 |
| Reactivverdünner R1 | | 9,8 | | |
| Reactivverdünner R3 | | | 9,6 | 9,65 |
| PI Cyracure UVI 9676 | 2 | | | |
| PI Irgacure 290 | | 1 | | |
| PI UV 2257 | | | 2 | 1,5 |
| Haftvermittler H1 | | 0,5 | | |

### Beispiel 2: Vergleichsversuche

Vorgehensweise und Test, um Flexibilität und Zähigkeit zu überprüfen: Herstellung von dünnen Filmen, die mittels UVA-LOC 1000 ausgehärtet werden (30 s, 1000 W, Fe-dotierte Quecksilberlampe). Um das Verhalten bei Alterung zu untersuchen, wurden die Filme anschließend 1 h sowie 14 h bei 130 °C im Ofen gelagert und die Filme händisch auf Flexibilität und Zähigkeit (Zähigkeit) getestet. Bewertungsskala: von 1 (sehr flexibel / sehr hohe Reißfestigkeit) bis 6 (sehr spröde / hoher Rissfortschritt).

### 1. Einfluss Epoxidharz

Als erfindungsgemäßer Vergleich wurden Proben 1 und 3 aus Beispiel 1 verwendet und das aromatische Epoxid-Basisharz durch die jeweils selbe Menge an cycloaliphatischem Epoxidharz cE2 ersetzt.

### Übersicht Test Flexibilität und Zähigkeit:

| Prob e | Basis-Epoxidharz | Photoinitiator | Flexibilität | | | Zähigkeit | | |
|---|---|---|---|---|---|---|---|---|
| | | | vor Alterung | 1 h @130°C | 14 h @ 130°C | vor Alterung | 1 h @130°C | 14 h @ 130°C |
| 1 | aE1 | Cyracure 6976 | 1 | 2 | 2 | 1 | 2-3 | 2-3 |
| V1 | cE2 | Cyracure 6976 | 3 | 3-4 | 4 | 3 | 3-4 | 4 |
| 3 | aE1 | UV 2257 | 1 | 1 | 1 | 1 | 1-2 | 1-2 |
| V2 | cE2 | UV 2257 | 1 | 2 | 3 | 1 | 2 | 3 |

### Zusammensetzung der Formulierungen (Angabe in Prozent)

| Probe: | 1 | V1 | 3 | V2 |
|---|---|---|---|---|
| Aromatisches Basisharz aE1 | 58,8 | | 48 | |
| Cycloaliph. Basisharz cE2 | | 58,8 | | 48 |
| Toughener CS1 | 29,4 | 29,4 | 28,8 | 28,8 |
| Co-Toughener | | | 2,0 | 2,0 |
| Flexibilisator F2 | 9,8 | 9,8 | 9,60 | 9,60 |
| Reaktivverdünner R3 | | | 9,60 | 9,60 |
| PI Cyracure 6976 | 2 | 2 | | |
| PI UV 2257 | | | 2 | 2 |
| Summe: | 100 | 100 | 100 | 100 |

Der Einsatz von cycloaliphatischem Epoxidharz führt nachweislich zu einem weniger flexiblen System im Vergleich zu Formulierungen basierend auf einem aromatischen Epoxidharz.

Die Ergebnisse zeigen ferner, dass die Flexibilität in cycloaliphatischen Systemen bei Alterung abnimmt, die Systeme basierend auf aromatischem Epoxidharz dagegen sehr viel weniger an Flexibilität und Reißfestigkeit verlieren.

### 2. Einfluss Core-Shell (CS)-Material (Toughener):

Untersucht wurde hier der Einsatz von Core-Shell-Materialien basierend auf cycloaliphatischen Epoxidharzen (UVR 6110) im Gegensatz zu Core-Shell-Materialien basierend auf aromatischem Epoxidharz (BFDGE).

### Übersicht Test Flexibilität und Zähigkeit:

| Probe | CS-Material | Basis-Epoxidharz | Photoinitiator | Flexibilität | | | Zähigkeit | | |
|---|---|---|---|---|---|---|---|---|---|
| | | | | vor Alterung | 1 h @130°C | 14 h @ 130°C | vor Alterung | 1 h @130°C | 14 h @ 130°C |
| 1 | CS1 | aE1 | Cyracure 6976 | 1 | 2 | 2 | 1 | 2-3 | 2-3 |
| 5 | CS3 | aE1 | Cyracure 6976 | 3 | 3 | 3 | 3 | 3 | 4 |
| V3 | CS3 | cE2 | Cyracure 6976 | 4 | 4 | 4 | 4 | 4 | 4 |
| 3 | CS1 | aE1 | UV 2257 | 1 | 1 | 1 | 1 | 1-2 | 1-2 |
| 6 | CS3 | aE1 | UV 2257 | 1 | 1-2 | 3 | 1 | 1-2 | 2 |
| V4 | CS3 | cE2 | UV 2257 | 1 | 2 | 3 | 1 | 2 | 2-3 |

### Zusammensetzung der Formulierungen (Angabe in Prozent)

| Probe | 1 | 5 | V3 | 3 | 6 | V4 |
|---|---|---|---|---|---|---|
| Aromatisches Basisharz aE1 | 58,8 | 58,8 | | 48 | 48 | |
| Cycloaliph. Basisharz cE2 | | | 58,8 | | | 48 |
| Toughener CS1 | 29,4 | | | 28,8 | | |
| Toughener CS3 | | 29,4 | 29,4 | | 28,8 | 28,8 |
| Co-Toughener | | | | 2,0 | 2,0 | 2,0 |
| Flexibilisator F2 | 9,8 | 9,8 | 9,8 | 9,60 | 9,60 | 9,60 |
| Reaktivverdünner R3 | | | | 9,60 | 9,60 | 9,60 |
| PI Cyracure 6976 | 2 | 2 | 2 | | | |
| PI UV 2257 | | | | 2 | 2 | 2 |
| Summe | 100 | 100 | 100 | 100 | 100 | 100 |

Wie bereits bei den Untersuchungen zum Basis-Epoxidharz zeigt sich analog, dass der Einsatz von CS-Partikeln, die in einer aromatischen Epoxidharz-Matirx eingebettet sind, in Bezug auf Flexibilität und Zähigkeit insbesondere nach Alterung besonders bevorzugt ist. Allerdings ergibt die Kombination eines aromatischen Epoxidharzes mit CS-Materialien mit einer cycloaliphatischen Epoxidharz-Matrix auch funktionierende Systeme, vor allem bei Einsatz des Photoinitiators UV 2257. Die Kombination von cycloaliphatischen Basis-Epoxidharz und CS-Materialien mit einer cycloaliphatischen Epoxidharz-Matrix führt jeweils zu Systemen ohne aromatisches Epoxidharz und damit zu den Systemen mit der geringsten Flexibilität und Zähigkeit.

### 3. Einfluss Flexibilisator und Co-Toughener

Untersucht wurde hier, inwieweit das System über Flexibilisator und Co-Toughener verfügen muss, um flexible und reißfeste Filme zu erhalten. Dazu wurden zum Vergleich Formulierungen hergestellt, die keinen Flexibilisator und kein Co-Toughener enthalten sowie Formulierungen, die keinen Flexibilisator, dafür aber Co-Toughener enthielten.

### Übersicht Test Flexibilität und Zähigkeit:

| Probe | Flexibilisator/ Co-Toughener | Basis-Epoxidharz | Photoinitiator | Flexibilität | | | Zähigkeit | | |
|---|---|---|---|---|---|---|---|---|---|
| | | | | vor Alterung | 1h @130°C | 14 h @ 130°C | vor Alterung | 1 h @130°C | 14 h @ 130°C |
| V5 | -- | aE1 | Cyracure 6976 | 3 | 3 | 4 | 3 | 4 | 4 |
| 1 | F2 | aE1 | Cyracure 6976 | 1 | 2 | 2 | 1 | 2-3 | 2-3 |
| V6 | 2% Fortegra 100 | aE1 | Cyracure 6976 | 2 | 2 | 2-3 | 1 | 2-3 | 3 |
| V7 | - | aE1 | UV 2257 | 2 | 2-3 | 3 | 2 | 2-3 | 3 |
| 7 | F2 | aE1 | UV 2257 | 1 | 1 | 1 | 1 | 1-2 | 1-2 |
| 3 | F2 | aE1 | UV 2257 | 1 | 1 | 1 | 1 | 1-2 | 1-2 |
| | 2% Fortegra 100 | | | | | | | | |

### Zusammensetzung der Formulierungen (Angabe in Prozent)

| Funktion | V5 | 1 | V6 | V7 | 7 | 3 |
|---|---|---|---|---|---|---|
| Basisharz aE1 | 65,3 | 58,8 | 64 | 54,4 | 49 | 48 |
| Toughener CS1 | 32,7 | 29,4 | 32 | 32,7 | 29,4 | 28,8 |
| Co-Toughener | | | 2 | | | 2,0 |
| Flexibilisator F2 | | 9,8 | | | 9,8 | 9,60 |
| Reaktivverdünner R3 | | | | 10,9 | 9,8 | 9,60 |
| PI Cyracure UVI 9676 | 2 | 2 | 2 | | | |
| PI UV 2257 | | | | 2 | 2 | 2 |
| Summe | 100 | 100 | 100 | 100 | 100 | 100 |

Die hergestellten Filme zeigen, dass ohne Einsatz von Flexibilisator und Co-Toughener Flexibilität und Zähigkeit abnehmen. Eine hohe Flexibilität und Zähigkeit kann dabei unter Einfluss von entweder Flexibilisator oder einer Kombination von Flexibilisator und Co-Toughener erzielt werden. Wiederum führt der Einsatz des Photoinitiators UV-2257 zu vergleichsweise flexibleren Filmen mit höherer Zähigkeit.

## Patentansprüche

1. Verwendung einer photohärtbaren Epoxidharzzusammensetzung als Versiegelungsmaterial zur Versiegelung von metallhaltigen elektrischen Leitungen oder Kontakten zum Schutz vor elektrochemischer Korrosion, wobei die photohärtbare Epoxidharzzusammensetzung enthält:
(a) 30 bis 90 Gew.-%, vorzugsweise 50 bis 85 Gew.-%, mindestens eines aromatischen Epoxidharzes;
(b) 2 bis 30 Gew.-%, vorzugsweise 5 bis 15 Gew.-%, mindestens eines Core-Shell-Partikels (CSR, Core shell rubber) als Zähigkeitsvermittler;
(c) 1 bis 20 Gew.-%, vorzugsweise 5 bis 10 Gew.-%, mindestens eines Flexibilisators, der reaktive funktionelle Gruppen ausgewählt aus Epoxid-, Carboxylat-, Amino und/oder Hydroxylgruppen aufweist; und
(d) 1 bis 4 Gew.-%, vorzugsweise 1,5 bis 2,5 Gew.-%, mindestens eines kationischen Photoinitiators, vorzugsweise umfassend ein Sulfonium- und/oder lodoniumsalz.

2. Verfahren zur Versiegelung von metallhaltigen elektrischen Leitungen oder Kontakten zum Schutz vor elektrochemischer Korrosion, umfassend:
(i) Auftragen einer photohärtbaren Epoxidharzzusammensetzung auf metallhaltigen elektrischen Leitungen oder Kontakte in Form eines Films, wobei die photohärtbare Epoxidharzzusammensetzung enthält:
(a) 30 bis 90 Gew.-%, vorzugsweise 50 bis 85 Gew.-%, mindestens eines aromatischen Epoxidharzes;
(b) 2 bis 30 Gew.-%, vorzugsweise 5 bis 15 Gew.-%, mindestens eines Core-Shell-Partikels (CSR, Core shell rubber) als Zähigkeitsvermittler;
(c) 1 bis 20 Gew.-%, vorzugsweise 5 bis 10 Gew.-%, mindestens eines Flexibilisators, der reaktive funktionelle Gruppen ausgewählt aus Epoxid-, Carboxylat-, Amino und/oder Hydroxylgruppen aufweist; und
(d) 1 bis 4 Gew.-%, vorzugsweise 1,5 bis 2,5 Gew.-%, mindestens eines kationischen Photoinitiators, vorzugsweise umfassend ein Sulfonium- und/oder lodoniumsalz,
(ii) Aushärten des Films durch Bestrahlung mit Licht.

3. . Verwendung nach Anspruch 1 oder Verfahren nach Anspruch 2, **dadurch gekennzeichnet, dass** das aromatische Epoxidharz ausgewählt wird aus Diglycidylethern basierend auf Bisphenol A, F und/oder S und Epoxid-Novolaken, insbesondere aus Bisphenol-A-Digylcidylethern und Bisphenol-F-Digylcidylethern.

4. Verwendung oder Verfahren nach mindestens einem der Ansprüche 1 bis 3, **dadurch gekennzeichnet, dass** die Core-Shell-Partikel ausgewählt werden aus solchen, die einen Kern aus Polybutadien und eine Schale aus Polybutadien, Polystyrol oder einem Polybutadien-Polystyrol-Copolymer aufweisen, wobei die Core-Shell-Partikel optional in einer Matrix dispergiert sind, wobei die Matrix vorzugsweise ausgewählt wird aus aromatischen Epoxidharzen, insbesondere Diglycidylethern basierend auf Bisphenol A, F und/oder S und Epoxid-Novolaken.

5. Verwendung oder Verfahren nach mindestens einem der Ansprüche 1 bis 4, **dadurch gekennzeichnet, dass** der mindestens eine Flexibilisator ein Polymer oder Oligomer mit einer Glasübergangstemperatur von unter 20 °C, vorzugsweise unter 0°C, noch bevorzugter unter - 30 °C, am bevorzugtesten unter - 50 °C ist, insbesondere ein Polyesterpolyol, ein Polyetherpolyol oder ein Polyester/Polyetherpolyol, wobei die Glasübergangstemperatur bestimmt wird mittels DSC gemäß DIN EN ISO 11357 bei einer Heizrate von 10°C/min.

6. Verwendung oder Verfahren nach mindestens einem der Ansprüche 1 bis 4, **dadurch gekennzeichnet, dass** der mindestens eine Flexibilisator Epoxid-Gruppen aufweist und insbesondere ein Monoglycidylether eines Phenols oder ein (3,4-Epoxycyclohexan-1-yl)methyl ester einer monobasischen oder dibasischen Carbonsäure ist.

7. Verwendung oder Verfahren nach mindestens einem der Ansprüche 1 bis 4, **dadurch gekennzeichnet, dass** der mindestens eine Flexibilisator ausgewählt wird aus der Gruppe bestehend aus Polytetramethylenetherglycol, Polycaprolactondiol oder-triol, Cardanol-Glycidylethern und Dicarbonsäure Bis((3,4-epoxycyclohexyl)methyl)estern, insbesondere Bis((3,4-epoxycyclohexyl)methyl)adipat.

8. Verwendung oder Verfahren nach mindestens einem der Ansprüche 1 bis 7, **dadurch gekennzeichnet, dass** der Photoinitiator ausgewählt wird aus Sulfonium- und lodoniumsalzen, wobei das Gegenion ausgewählt wird aus Hexafluoroantimonat, Hexafluorophosphat und (Tetrakis(pentafluoroaryl))boraten, insbesondere aus Triarylsulfonium- und Bis(alkylphenyl)iodoniumsalzen.

9. Verwendung oder Verfahren nach mindestens einem der Ansprüche 1 bis 8, **dadurch gekennzeichnet, dass** die photohärtbare Epoxidharzzusammensetzung ferner
(i) einen Co-Zähigkeitsvermittler, vorzugsweise in einer Menge von 0,1-10 Gew.-%, besonders bevorzugt 0,5-2,5 Gew.-%; und/oder
(II) einen Reaktivverdünner, vorzugsweise in einer Menge von 0,1-10 Gew.-%, besonders bevorzugt 5-10 Gew.-%; und/oder
(iii) einen Haftvermittler, vorzugsweise in einer Menge von 0,1-3 Gew.-%, besonders bevorzugt 0,5-2 Gew.-%, enthält.

10. Verwendung oder Verfahren nach Anspruch 9, **dadurch gekennzeichnet, dass** der Reaktivverdünner ausgewählt wird aus Monoglycidylethern von aliphatischen oder aromatischen Alkoholen, insbesondere C12/C14-Fettalkoholen und Alkylphenolen, vorzugsweise para-tert-Butylphenol, und Oxetanen, insbesondere Trimethylolpropanoxetan (TMPO).

11. Verwendung oder Verfahren nach mindestens einem der Ansprüche 9 und 10, **dadurch gekennzeichnet, dass** der Haftvermittler ausgewählt wird aus chelat-modifizierten Epoxidharzen und Epoxy-modifizierten Silanen.

12. Verwendung oder Verfahren nach mindestens einem der Ansprüche 9 bis 11, **dadurch gekennzeichnet, dass** der Co-Zähigkeitsvermittler ausgewählt wird aus Polyetherpolyolen, insbesondere Polyetherpolyol Block Copolymeren.

13. Verwendung oder Verfahren nach mindestens einem der Ansprüche 1 bis 12, **dadurch gekennzeichnet, dass** der Flexibilisator (c) reaktive Hydroxylgruppen aufweist.

14. Verwendung oder Verfahren nach mindestens einem der Ansprüche 1 bis 13, **dadurch gekennzeichnet, dass** die metallhaltigen elektrischen Leitungen oder Kontakte Aluminium enthalten oder daraus bestehen.
oder daraus bestehen.

## Claims

1. A use of a photo-curable epoxy resin composition as a sealing material for sealing metal-containing electrical lines or contacts for protection against electrochemical corrosion, wherein the photo-curable epoxy resin composition contains:
(a) 30 to 90 wt.%, preferably 50 to 85 wt.%, of at least one aromatic epoxy resin;
(b) 2 to 30 wt.%, preferably 5 to 15 wt.%, of at least one core-shell particle (CSR, core-shell rubber) as a toughener;
(c) 1 to 20 wt. %, preferably 5 to 10 wt.%, of at least one flexibilizer, which comprises reactive functional groups selected from epoxy, carboxylate, amino and/or hydroxyl groups; and
(d) 1 to 4 wt. %, preferably 1.5 to 2.5 wt.%, of at least one cationic photoinitiator, preferably comprising a sulfonium salt and/or iodine salt.

2. A method for sealing metal-containing electrical lines or contacts for protection against electrochemical corrosion, comprising:
(i) applying a photo-curable epoxy resin composition to metal-containing electrical lines or contacts in the form of a film, wherein the photo-curable epoxy resin composition contains:
(a) 30 to 90 wt.%, preferably 50 to 85 wt.%, of at least one aromatic epoxy resin;
(b) 2 to 30 wt.%, preferably 5 to 15 wt.%, of at least one core-shell particle (CSR, core-shell rubber) as a toughener;
(c) 1 to 20 wt. %, preferably 5 to 10 wt.%, of at least one flexibilizer, which comprises reactive functional groups selected from epoxy, carboxylate, amino and/or hydroxyl groups; and
(d) 1 to 4 wt. %, preferably 1.5 to 2.5 wt.%, of at least one cationic photoinitiator, preferably comprising a sulfonium salt and/or iodine salt,
(ii) curing the film by irradiation with light.

3. The use according to claim 1 or the method according to claim 2, **characterized in that** the aromatic epoxy resin is selected from diglycidyl ethers based on bisphenol A, F and/or S and epoxy novolacs, in particular from bisphenol A diglycidyl ethers and bisphenol F diglycidyl ethers.

4. The use or method according to at least one of claims 1 to 3, **characterized in that** the core-shell particles are selected from those having a core made from polybutadiene and a shell made from polybutadiene, polystyrene or a polybutadiene-polystyrene copolymer, the core-shell particles optionally being dispersed in a matrix, the matrix preferably being selected from aromatic epoxy resins, in particular diglycidyl ethers based on bisphenol A, f and/or S and epoxy novolacs.

5. The use or method according to at least one of claims 1 to 4, **characterized in that** the at least one flexibilizer is a polymer or oligomer having a glass transition temperature of below 20 °C, preferably below 0 °C, more preferably below -30 °C, most preferably below -50 °C, in particular a polyester polyol, a polyether polyol or a polyester/polyether polyol, the glass transition temperature being determined by means of DSC in accordance with DIN EN ISO 11357 at a heating rate of 10 °C/min.

6. The use or method according to at least one of claims 1 to 4, **characterized in that** the at least one flexibilizer comprises epoxy groups and in particular is a monoglycidyl ether of a phenol or a (3,4-epoxycyclohexan-1-yl)methyl ester of a monobasic or dibasic carboxylic acid.

7. The use or method according to at least one of claims 1 to 4, **characterized in that** the at least one flexibilizer is selected from the group consisting of polytetramethylene ether glycol, polycaprolactone diol or triol, cardanol glycidyl ethers and dicarboxylic acid bis((3,4-epoxycyclohexyl)methyl) esters, in particular bis(3,4-epoxycyclohexyl)methyl) adipate.

8. The use or method according to at least one of claims 1 to 7, **characterized in that** the photoinitiator is selected from sulfonium salts and iodonium salts, the counterion being selected from hexafluoroantimonate, hexafluorophosphate and (tetrakis(pentafluoroaryl))borates, in particular from triarylsulfonium and bis(alkylphenyl)iodonium salts.

9. The use or method according to one of claims 1 to 8,
**characterized in that** the photo-curable epoxy resin composition further contains
(i) a co-toughener, preferably in an amount of 0.1-10 wt.%, particularly preferably 0.5-2.5 wt.%; and/or
(II) a reactive diluent, preferably in an amount of 0.1-10 wt. %, particularly preferably 5-10 wt.%; and/or
(iii) an adhesion promoter, preferably in an amount of 0.1-3 wt.%, particularly preferably 0.5-2 wt.%.

10. The use or method according to claim 9, **characterized in that** the reactive diluent is selected from monoglycidyl ethers of aliphatic or aromatic alcohols, in particular C12/C14 fatty alcohols and alkylphenols, preferably para-tert-butylphenol, and oxetanes, in particular trimethylolpropanyloxetane (TMPO).

11. The use or method according to at least one of claims 9 and 10, **characterized in that** the adhesion promoter is selected from chelate-modified epoxy resins and epoxy-modified silanes.

12. The use or method according to at least one of claims 9 to 11, **characterized in that** the co-toughener is selected from polyether polyols, in particular polyether polyol block copolymers.

13. The use or method according to at least one of claims 1 to 12, **characterized in that** the flexibilizer (c) comprises reactive hydroxyl groups.

14. The use or method according to at least one of claims 1 to 13, **characterized in that** the metal-containing electrical lines or contacts contain aluminum or consist thereof.
or consist thereof.

## Revendications

1. Utilisation d'une composition de résine époxy photodurcissable comme matériau de scellement pour le scellement de câbles ou contacts électriques renfermant du métal pour la protection contre la corrosion électrochimique, dans laquelle la composition de résine époxy photodurcissable contient :
(a) 30 à 90 % en poids, de préférence 50 à 85 % en poids, d'au moins une résine époxy aromatique ;
(b) 2 à 30 % en poids, de préférence 5 à 15 % en poids, d'au moins une particule coeur-écorce (CSR, Core Shell Rubber) comme agent d'amélioration de la résistance ;
(c) 1 à 20 % en poids, de préférence 5 à 10 % en poids, d'au moins un flexibilisateur qui présente des groupes fonctionnels réactifs choisis parmi les groupes époxy, carboxylate, amino et/ou hydroxyle ; et
(d) 1 à 4 % en poids, de préférence 1,5 à 2,5 % en poids, d'au moins un photoinitiateur cationique, comprenant de préférence un sel de sulfonium et/ou d'iodonium.

2. Procédé permettant le scellement de câbles ou contacts électriques renfermant du métal pour la protection contre la corrosion électrochimique, comprenant :
(i) l'application d'une composition de résine époxy photodurcissable sous forme de film sur des câbles ou contacts électriques renfermant du métal, dans lequel la composition de résine époxy photodurcissable contient :
(a) 30 à 90 % en poids, de préférence 50 à 85 % en poids, d'au moins une résine époxy aromatique ;
(b) 2 à 30 % en poids, de préférence 5 à 15 % en poids, d'au moins une particule coeur-écorce (CSR, Core Shell Rubber) comme agent d'amélioration de la résistance ;
(c) 1 à 20 % en poids, de préférence 5 à 10 % en poids, d'au moins un flexibilisateur qui présente des groupes fonctionnels réactifs choisis parmi les groupes époxy, carboxylate, amino et/ou hydroxyle ; et
(d) 1 à 4 % en poids, de préférence 1,5 à 2,5 % en poids, d'au moins un photoinitiateur cationique, comprenant de préférence un sel de sulfonium et/ou d'iodonium,
(ii) le durcissement du film par irradiation avec de la lumière.

3. Utilisation selon la revendication 1 ou procédé selon la revendication 2, **caractérisé en ce que** la résine époxy aromatique est choisie parmi des éthers diglycidyliques à base de bisphénol A, F et/ou S et des novolaques époxy, en particulier parmi des éthers diglycidyliques à bisphénol A et des éthers diglycidyliques à bisphénol F.

4. Utilisation ou procédé selon au moins l'une des revendications 1 à 3, **caractérisé en ce que** les particules coeur-écorce sont choisies parmi celles qui présentent un coeur en polybutadiène et une écorce en polybutadiène, en polystyrène ou en un copolymère polybutadiène-polystyrène, dans lequel les particules coeur-écorce sont éventuellement dispersées dans une matrice, dans lequel la matrice est de préférence choisie parmi des résines époxy aromatiques, en particulier des éthers diglycidyliques à base de bisphénol A, F et/ou S et des novolaques époxy.

5. Utilisation ou procédé selon au moins l'une des revendications 1 à 4, **caractérisé en ce que** l'au moins un flexibilisateur est un polymère ou un oligomère comportant une température de transition vitreuse inférieure à 20 °C, de préférence inférieure à 0 °C, plus préférablement inférieure à -30 °C, de manière préférée entre toutes inférieure à -50 °C, en particulier un polyester polyol, un polyéther polyol ou un polyester/polyéther polyol, dans lequel la température de transition vitreuse est déterminée par ACD conformément à la norme DIN EN ISO 11357 à une vitesse de chauffage de 10 °C/min.

6. Utilisation ou procédé selon au moins l'une des revendications 1 à 4, **caractérisé en ce que** l'au moins un flexibilisateur présente des groupes époxy, et en particulier est un éther monoglycidylique d'un phénol ou un (3,4-époxycyclohéxane-1-yl)méthyl ester d'un acide carboxylique monobasique ou dibasique.

7. Utilisation ou procédé selon au moins l'une des revendications 1 à 4, **caractérisé en ce que** l'au moins un flexibilisateur est choisi dans le groupe constitué par le polytétraméthylène éther glycol, le polycaprolactonediol ou le polycaprolactonetriol, des éthers glycidyliques de cardanol et des bis((3,4-époxycyclohexyl)méthyl)esters d'acide dicarboxylique, en particulier le bis((3,4-époxycyclohexyl)méthyl)adipate.

8. Utilisation ou procédé selon au moins l'une des revendications 1 à 7, **caractérisé en ce que** le photoinitiateur est choisi parmi des sels de sulfonium et d'iodonium, dans lequel le contre-ion est choisi parmi l'hexafluoroantimonate, l'hexafluorophosphate et des (tétrakis(pentafluoroaryl))borates, en particulier parmi des sels de triarylsulfonium et de bis(alkylphényl)iodonium.

9. Utilisation ou procédé selon au moins l'une des revendications 1 à 8, **caractérisé en ce que** la composition de résine époxy photodurcissable contient en outre
(i) un coagent d'amélioration de la résistance, de préférence en une quantité de 0,1 à 10 % en poids, de manière particulièrement préférée de 0,5 à 2,5 % en poids ; et/ou
(ii) un diluant réactif, de préférence en une quantité de 0,1 à 10 % en poids, de manière particulièrement préférée de 5 à 10 % en poids ; et/ou
(iii) un agent d'amélioration de l'adhésivité, de préférence en une quantité de 0,1 à 3 % en poids, de manière particulièrement préférée de 0,5 à 2 % en poids.

10. Utilisation ou procédé selon la revendication 9, **caractérisé en ce que** le diluant réactif est choisi parmi des éthers monoglycidyliques d'alcools aliphatiques ou aromatiques, en particulier des alcools gras en C12/C14 et alkylphénols, de préférence le para-tert-butylphénol, et des oxétanes, en particulier le triméthylolpropanoxétane (TMPO).

11. Utilisation ou procédé selon au moins l'une des revendications 9 et 10, **caractérisé en ce que** l'agent d'amélioration de l'adhésivité est choisi parmi des résines époxy modifiées par chélate et des silanes modifiés par époxy.

12. Utilisation ou procédé selon au moins l'une des revendications 9 à 11, **caractérisé en ce que** le coagent d'amélioration de la résistance est choisi parmi des polyéther polyols, en particulier des copolymères séquencés de polyéther polyol.

13. Utilisation ou procédé selon au moins l'une des revendications 1 à 12, **caractérisé en ce que** le flexibilisateur (c) présente des groupes hydroxyle réactifs.

14. Utilisation ou procédé selon au moins l'une des revendications 1 à 13, **caractérisé en ce que** les câbles ou contacts électriques renfermant du métal contiennent de l'aluminium ou sont constitués de celui-ci.
ou sont constitués de celui-ci.
